Europäisches Patentamt

European Patent Office

Office européen des brevets

(19)

(11) Publication number: **0 171 940**
**A1**

(12) # EUROPEAN PATENT APPLICATION

(21) Application number: **85305147.2**

(22) Date of filing: **18.07.85**

(51) Int. Cl.⁴: **G 06 F 13/28**

(30) Priority: **24.07.84 GB 8418852**
**07.12.84 GB 8430965**

(43) Date of publication of application:
**19.02.86 Bulletin 86/8**

(84) Designated Contracting States:
**AT BE CH DE FR GB IT LI LU NL SE**

(71) Applicant: **BRITISH TELECOMMUNICATIONS plc**
**British Telecom Centre 81 Newgate Street**
**London EC1A 7AJ(GB)**

(72) Inventor: **Cook, Robin John**
**52 St.Nicholas Close**
**Little Chalfont Buckinghamshire, HP7 9NP(GB)**

(72) Inventor: **Hammond, Nigel Ralph**
**47 Amberwood Rise**
**New Malden Surrey KT3 5JG(GB)**

(74) Representative: **Irish, Vivien Elizabeth et al,**
**British Telecom Intellectual Property Unit Room 1304,**
**151 Gower Street**
**London WC1E 6BA(GB)**

(54) A direct memory access device and a method of using the device in a data transfer system.

(57) A direct memory access (DMA) device (10) allows transfers between a transmission circuit and a memory device with minimum disruption to a processing unit which is connected to the memory device by a system bus. The DMA device has a buffer (26) preferably consisting of a one byte input buffer (28) and a one byte output buffer (27). During transfers between the transmission circuit and the buffers the DMA device (10) does not require use of the system bus but still appears to be a conventional DMA device to the transmission circuit. Transfers between the buffers and the memory device are preferably implemented by cycle stealing and occur very rapidly so that the processing unit is not locked out from the system bus for substantial periods.

EP 0 171 940 A1

.../...

FIG.1

0171940

## A DIRECT MEMORY ACCESS DEVICE AND A METHOD
## OF USING THE DEVICE IN A DATA TRANSFER SYSTEM

This invention relates to an improved direct memory access (DMA) device which causes minimal disruption to a processing unit.

In many data processing environments a processing unit, for example a microprocessor, is required to receive data, process said data and then forward the data for transmission or further processing. The processing unit usually has an associated memory device which is accessed via an address bus and a data bus; these busses in combination with control lines are collectively known as a system bus. The amount of processing which can be performed by the processing unit is limited by the time required for said unit to implement each instruction and the time during which the processor is held up by data transfers.

A known technique for performing data transfers is that of direct memory access (DMA) by which data is transferred directly to a memory device without the need for instructions to be implemented by an associated processing unit.

However during a direct memory access the DMA device has control of the system bus and the processing unit cannot access the memory device. The problem is particularly acute if the data is being transferred to or from a relatively slow transmission circuit. It is an object of the present invention to provide an improved direct memory access device which requires minimal use of the system bus.

- 2 -                    0171940

The DMA device of the present invention has a buffer preferably consisting of a one byte input buffer and a one byte output buffer. During transfers between the transmission circuit and the buffers the DMA device does not require use of the system bus but still appears to be a conventional DMA device to the transmission circuit.

According to a first aspect of the present invention there is provided a direct memory access device for transferring data between a transmission circuit and a memory device in which said memory device is connected to a processing unit by a system bus and said system bus includes a data bus and an address bus, comprising an address port for connection to the address bus, a data port for connection to the data bus and a transmission port for connection to the transmission circuit, buffer means, means for transferring data between the data port and the buffer means, means for transferring data between the transmission port and the buffer means, and control means for requesting use of the system bus and for returning control of the system bus to the processing unit when data is not being transferred between the data port and the buffer means.

Preferably the control means detects intervals during which the processing unit does not require the system bus, and said control means only requests use of the system bus during said intervals; this procedure is known as cycle stealing.

According to a second aspect of the invention there is provided a data transfer system comprising a processing unit, a memory device, a direct memory access device and a transmission circuit in which the processing unit is connected to the memory device by a system bus including a data bus and an address bus, in which said memory access device comprises an address port connected to the address bus, a data port connected to the data bus and a transmission port connected to the transmission circuit, buffer means, means for transferring data between the data port and the buffer means, means for transferring data between the transmission port and the buffer means, and control means for requesting use of the system bus and for returning control of the system bus to the processing unit when data is not being transferred between the data port and the buffer means.

The access device may be dedicated for transfer to a memory devise or dedicated for transfer from a memory device, but preferably said buffer means comprises an output buffer for data transfers from the memory device to the transmission circuit, and an input buffer for data transfers from the transmission circuit to the memory device. Each buffer may be a first-in-first-out memory device but preferably each buffer can store one word of data.

In a preferred embodiment the access device includes programmable means for transferring a succession of words between said buffer and a plurality of memory locations in said memory device.

According to a third aspect of the present invention there is provided a method of transferring data between a memory device and a transmission circuit by direct memory access (DMA) in which the memory device is connected to a processing unit by a system bus, a DMA device is connected to said system bus and to said transmission circuit, and said DMA device includes a buffer means, wherein the DMA device takes over the system bus for transfers between the buffer means and the memory device, and the DMA device does not take over the system bus during transfers between the buffer means and the transmission circuit.

- 4 -                                                    0171940

The invention provides improved DMA transfers, a CPU may receive information without substantial disruption. Furthermore, a plurality of processors may provide a powerful packet switching system without requiring expensive processing units.

The invention will now be described, by way of example only, with reference to the drawings, in which:-

Figure 1 shows a direct memory access device;

Figure 2 shows the device of Figure 1 connected to a memory device and a transmission circuit; and

Figure 3 shows three transfer devices connected to a common memory device.

An improved direct memory access device 10 has a control port 20, for connection to a control bus, an address port 21, for connection to an address bus, and a data port 22 for connection to a data bus 4. Internally said ports 20, 21 and 22 are respectively connected to a device control bus 23, a device address bus 24 and a device data bus 25.

The device data bus 25 is connected to a buffer means 26 consisting of a one byte output buffer 27 and a one byte input buffer 28. If a larger buffer means is required buffers 27 and 28 may be implemented as suitably sized first in first out buffers. The buffers 27,28 are connected to a transmission bus via an internal bus 29 and a transmission port 30.

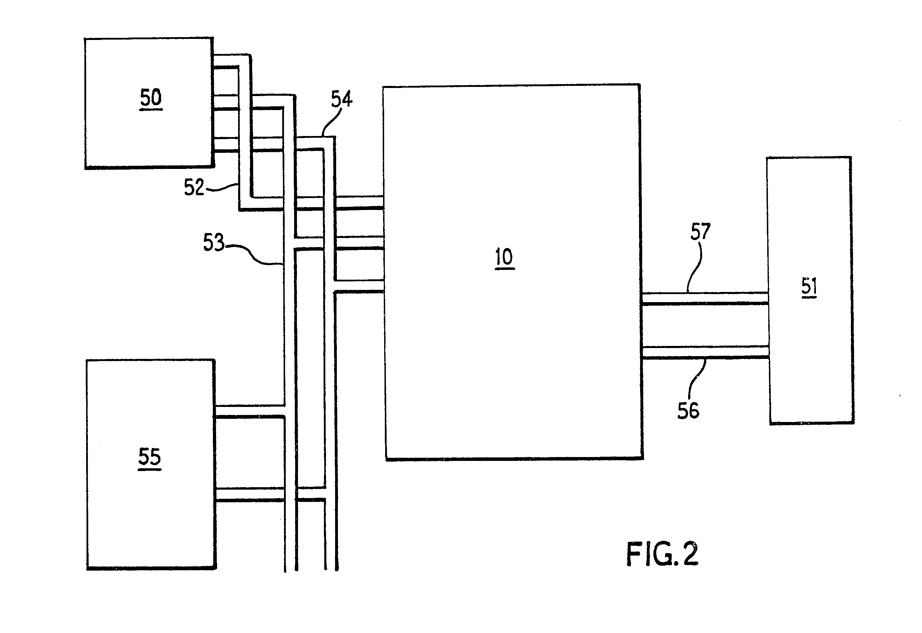

The device 10 is shown in Figure 2 connected between a central processing unit (CPU) 50 and a transmission circuit 51. The CPU 50 communicates by means of a system bus consisting of a system control bus 52, a system address bus 53 and a system data bus 54. The address bus 53 and the data bus 54 are connected to a memory device 55 and data is transferred between the CPU 50 and the memory device 55 over the data bus 54 while the CPU 50 applies an address to the memory via the address bus 53. The device 10 provides direct memory access to a transmission circuit 51 via a transmission bus 56. Status information may also be transferred between the transmission circuit 51 and the device 10 over a transmission control bus 57.

During a transfer from the memory device 55 to the transmission circuit 51 the device 10 uses the system bus to transfer a byte of data from the memory device to its output buffer 27. This transfer is performed very quickly at a time when the processing unit 50 does not require the system bus. Control of the system bus is then returned to the processing unit while the byte of data is transferred from the output buffer 27 to the transmission circuit 51.

The device 10 transfers data in response to a request from either the CPU 50 or from the transmission circuit 51 and is programmed by the CPU thus allowing a plurality of bytes to be transferred between the transmission circuit 51 and a block of memory positions in the memory device 55. When the transmission circuit 51 requests a data transfer the device 10 must generate an interrupt signal which is supplied to the CPU 50 via the control bus 52. The CPU will then jump to a subroutine which programs the device 10 so that data may be transferred from the transmission circuit 51.

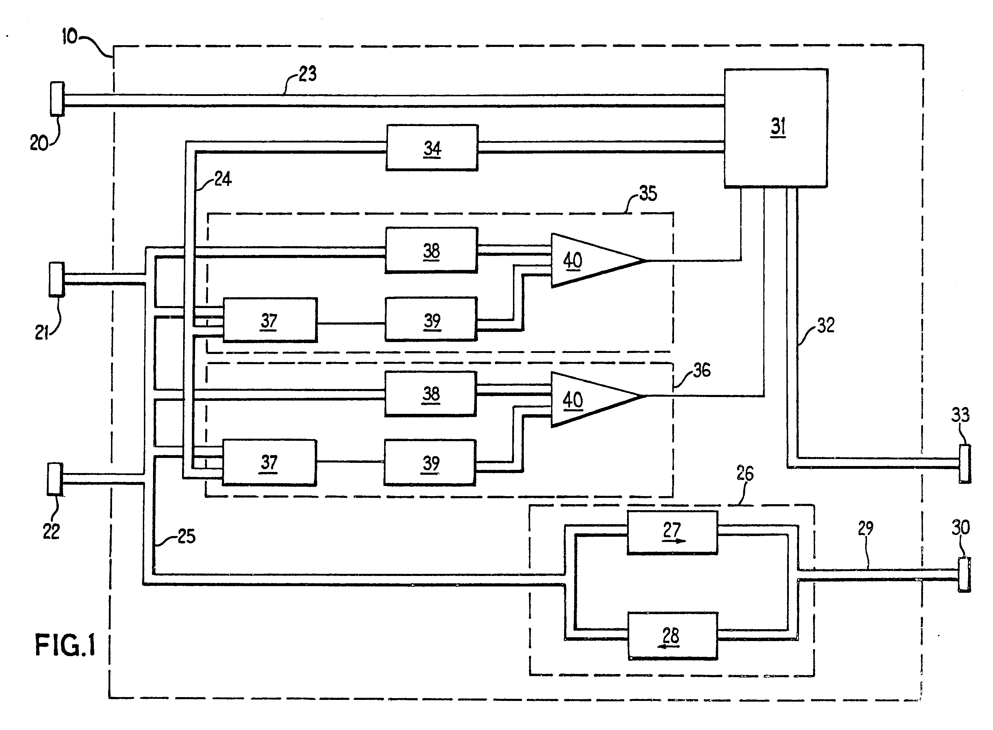

The device control bus 23 (referring back to Figure 1) is connected to a control circuit 31. The control circuit 31 is also connected to a device transmission control bus 32 which is connected to the transmission control bus 57 via a transmission control port 33. The control circuit 31 oversees the operation of the device 10 by receiving and transmitting control signals, via the control busses 23 and 32, and by supplying enabling signals to other circuits within the device 10.

During programming operations the CPU identifies circuits within the device 10 using three lines of the address bus which are dedicated to transfer operations. Addresses which relate to the device 10 are latched by an address latch and decoder 34 connected to the device address bus 24. The control circuit 31 then supplies enabling signals to the circuits identified by the decoder 34.

Addresses for data transfers from the memory device 55 are generated by a first set of programmable means 35 and addresses for data transfers to the memory device 55 are generated by a second set of programmable means 36. Each set of programmable means includes an address pointer 37 which is connected to the device data bus 25 and to the device address bus 24. The address pointer 37 is loaded with the first memory location to be read (in the first means 35) or to be written to (in the second means 36) by sequentially receiving two bytes from the CPU via data buses 4 and 25. Before receiving these two bytes a suitable code must be supplied to the device address bus 24 which enables the required address pointer 37 so that it will accept data from the data bus 25.

The device data bus 25 is also connected to an address register 38 in each programmable means 34 and 35, which is loaded with a number indicating the number of transfers to be made. The status registers 38 also receives enabling signals from the control circuit 31. During a transfer between the buffer means 26 and the memory 55 an address pointer will apply its stored value to the device address bus 24 in response to a second enable signal from the control circuit 31. The duration of this second enabling signal is ideally the minimum required to successfully perform a transfer between the memory device 55 and the buffer means 26. After the transfer has been completed the control circuit supplies an increment signal to the address pointer 37 and to a counter 39. The address pointer 37 then increases the value of the address stored therein and the counter 39 is incremented thus counting the number of transfers which have been made. While a programmable means 35,36 is being programmed its counter 39 is reset in response to a signal from the control circuit 31. The address register 38 and the counter 39 continuously provide an output to a digital comparator 40 which generates an output to the control circuit when the required number of transfers have been performed.

The device 10 may be usefully employed in a packet switch in which a predetermined number of 8 bit octets are transmitted as a packet according to CCITT X25 recommendations. A CPU 50 (for example a Z80 microprocessor) may be an input/output (I/O) processor which checks packets for errors and requests retransmission of any corrupted data. The I/O processor then checks that packets are being sent in the correct order before passing incoming packets to the actual switching circuitry or passing outgoing packets to a transmission circuit. The transmission circuit may be a signetics 2652 chip which provides an X25 level 1 interface, ie a synchronous link which is maintained when packets are not being sent by generating flag octets consisting of six contiguous ones.

In operation the signetics 2652 chip receives the first octet of a packet, which it requires to send to the CPU 50, from an external line. The CPU 50 may be processing a previously supplied packet but has space in its memory into which the next packet is to be placed. The signetics chip applies a data waiting signal to the control port 33 and the control circuit 31 interrupts the CPU 50. The CPU 50 services this interrupt by programming the second programmable means 36 so that the new data can be written to the awaiting memory space. The address pointer 37 (of means 36) is loaded with the first memory position of the available block and the address register 38 is loaded with the number of octets that the CPU expects to receive. Once the pointer 37 and the register 38 have been loaded the CPU returns to processing information and the device 10 is left to perform the transfer.

The device 10 now transmits a send data signal via port 33 to the signetics chip which then sends an octet via transmission port 30 to the input buffer 29. Once this transfer has been completed the control circuit waits for a suitable time to write the octet to the memory device 55. The control circuit is looking at the system address bus 53 via its latch and decoder circuit 34 and therefore knows when the CPU has just fetched an instruction from the memory . This is the ideal time to perform the memory access because the CPU does not require the system bus - a process known as cycle stealing.

After the octet has been transferred from the input buffer 28 to the memory device 55 the address pointer 37 is incremented and the process of transferring another octet from the signetics chip is repeated. This process continues until a complete packet has been transferred and the value stored in the counter 39 of means 36 is equal to the value stored in the register 38. On reaching this condition a request to send data from the signetics chip results in a second interrupt to the CPU and reprogramming of the second means 36.

It can be seen that transfers to the signetics chip are performed in a similar fashion using the first programmable circuit 35 and the output buffer 27.

During a transfer between the buffer means 26 and the memory device 55 the device 10 has control of the address bus 53 and the data bus 54 while the data port and address port of the CPU are in tristate. To achieve this the control circuit supplies a signal to a bus request terminal of the CPU 50 which is connected to the control bus 52. When the CPU 50 is ready to give control of these busses to the device 10 it returns a bus acknowledge signal over the control bus to the device 10 and places its data and address ports into tristate.

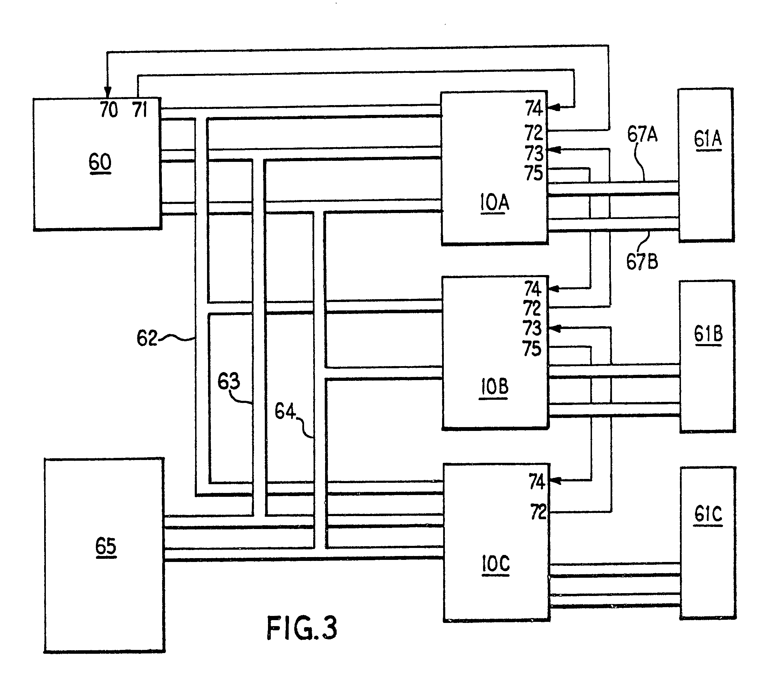

A plurality of transfer devices as detailed herein may access the same memory and their priority to do so may be determined by the physical arrangement of the bus request and bus acknowledge lines. A suitable arrangement is shown in Figure 3 in which three transfer devices 10A, 10B and 10C are connected to the system bus of a CPU 60. The CPU 60 has a bus request terminal 70 and a bus acknowledge terminal 71 which are connected to lines in the control bus but are shown separately in Figure 3. After a signal has been applied to the bus request terminal the CPU 60 places its data port and its address port (connected to the data bus 54 and the address bus 53 respectively) into tristate. A bus acknowledge signal is then supplied to terminal 61 and on receiving this signal a device 10 may take over the system bus.

Each device 10 has a bus request output terminal 72, onto which it supplies a bus request signal when it requires use of the system bus, and a bus request input terminal 73 by which it receives bus requests from other devices 10. If device 10C generates a bus request signal this is supplied to the bus request input 73 of device 10B, via the bus request output 72 of device 10B to the bus request input 73 of device 10A, and via the bus request output 72 of device 10B to the bus request

0171940

terminal 70 of the CPU 60. Similarly a bus acknowledge
signal is relayed to the devices 10 via bus acknowledge
inputs 74 and bus acknowledge outputs 75. If a device 10
requires to use the system bus it will latch the bus
acknowledge signal and will not then relay the signal to
the next device in the chain until it has finished using
the system.

CLAIMS

1. A direct memory access device for transferring data between a transmission circuit and a memory device in which said memory device is connected to a processing unit by a system bus and said system bus includes a data bus and an address bus, comprising an address port for connection to the address bus, a data port for connection to the data bus and a transmission port for connection to the transmission circuit, buffer means, means for transferring data between the data port and the buffer means, means for transferring data between the transmission port and the buffer means, and control means for requesting use of the system bus and for returning control of the system bus to the processing unit when data is not being transferred between the data port and the buffer means.

2. A direct memory access device according to claim 1 in which the control means detects intervals during which the processing unit does not require the system bus, and said control means can request use of the system bus during said intervals.

3. A direct memory access device according to claim 1 in which said buffer means comprises an output buffer for data transfers from the memory device to the transmission circuit, and an input buffer for data transfers from the transmission circuit to the memory device.

4. A direct memory access device according to claim 3 in which each buffer can store one word of data.

5. A direct memory access device according to claim 1 including programmable means for transferring a succession of words between said buffer and a plurality of memory locations in said memory device.

6.  A direct memory access device according to claim 5 in which the programmable means includes means for indicating a first memory position, means for storing the number of data transfers to be made, and means for calculating subsequent addresses.

7.  A data transfer system comprising a processing unit, a memory device, a direct memory access device and a transmission circuit in which the processing unit is connected to the memory device by a system bus including a data bus and an address bus, in which said memory access device comprises an address port connected to the address bus, a data port connected to the data bus and a transmission port connected to the transmission circuit, buffer means, means for transferring data between the data port and the buffer means, means for transferring data between the transmission port and the buffer means, and control means for requesting use of the system bus and for returning control of the system bus to the processing unit when data is not being transferred between the data port and the buffer means.

8.  A data transfer system according to claim 7 in which the control means detects intervals during which the processing unit does not require the system bus, and said control means can request use of the system bus during said intervals.

9.  A data transfer system according to claim 7 in which said buffer means comprises an output buffer for data transfers from the memory device to the transmission circuit, and an input buffer for data transfers from the transmission circuit to the memory device.

10. A data transfer system according to claim 9 in which each buffer can store one word of data.

11. A data transfer system according to claim 7 including programmable means for transferring a succession of words between said buffer and a plurality of memory locations in said memory device.

12. A data transfer system according to claim 11 in which the programmable means includes means for indicating a first memory position, means for storing the number of data transfers to be made, and means for calculating subsequent addresses.

13. A method of transferring data between a memory device and a transmission circuit by direct memory access (DMA) in which the memory device is connected to a processing unit by a system bus, a DMA device is connected to said system bus and to said transmission circuit, and said DMA device includes a buffer means, wherein the DMA device takes over the system bus for transfers between the buffer means and the memory device, and the DMA device does not take over the system bus during transfers between the buffer means and the transmission circuit.

14. A method of transferring data according to claim 13 in which the DMA device is programmed to transfer a predetermined number of words between the buffer means and a series of locations in said memory device.

FIG.1

0171940

FIG.2

FIG.3

0171940

European Patent
Office

EUROPEAN SEARCH REPORT

Application number

EP 85 30 5147

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | WO-A-8 401 449 (PETERSON) * Page 2, line 20 - page 3, line 20; page 5, line 5 - page 13, line 34 * | 1-12 | G 06 F 13/28 |
| | --- | | |
| A | COMPUTER DESIGN, vol. 12, no. 7, July 1973, pages 69-73, Concord, US; P. BOUNDS: "Buffering high speed data for minicomputer input" * Page 69 - page 70, right-hand column, line 23 * | 1-12 | |
| | --- | | |
| A | IBM TECHNICAL DISCLOSURE BULLETIN, vol. 22, no. 7, December 1979, pages 2715,2716, New York, US; R.A. SMITH et al.: "Parallel microprocessor I/O operation" * Whole document * | 1-14 | |
| | --- | | TECHNICAL FIELDS SEARCHED (Int. Cl.4) |
| A | IBM TECHNICAL DISCLOSURE BULLETIN, vol. 15, no. 5, October 1972, pages 1565-1567, New York, US; M. JACKSON et al.: "Buffer for disk files" * Whole document * | 13,14 | G 06 F 13/28 G 06 F 13/30 G 06 F 13/32 G 06 F 13/34 G 06 F 13/00 |
| | --- -/- | | |

The present search report has been drawn up for all claims

| Place of search | Date of completion of the search | Examiner |
|---|---|---|
| THE HAGUE | 16-10-1985 | QUESSON C.J. |

0171940

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int Cl 4) |
| A | ELECTRONIC DESIGN, vol. 31, no. 23, 10th November 1983, pages 189-198, Denville, US; A.J. WEISSBERGER: "muP makes the connection to data communication lines"<br>* Page 189, right-hand column, line 29 - page 190, right-hand column, line 13 * | 13,14 | |
| | ----- | | |
| | | | TECHNICAL FIELDS SEARCHED (Int Cl 4) |

The present search report has been drawn up for all claims

| Place of search | Date of completion of the search | Examiner |
|---|---|---|
| THE HAGUE | 16-10-1985 | QUESSON C.J. |